Europäisches Patentamt

(19) European Patent Office

Office européen des brevets

(11) Veröffentlichungsnummer : **0 110 215**
**B1**

(12) EUROPÄISCHE PATENTSCHRIFT

(45) Veröffentlichungstag der Patentschrift :
30.07.86

(51) Int. Cl.⁴ : **F 16 B 13/02**

(21) Anmeldenummer : 83111246.1

(22) Anmeldetag : 10.11.83

(54) Spreizdübel aus Kunststoff.

(30) Priorität : 15.11.82 DE 3242220

(43) Veröffentlichungstag der Anmeldung :
13.06.84 Patentblatt 84/24

(45) Bekanntmachung des Hinweises auf die Patenterteilung : 30.07.86 Patentblatt 86/31

(84) Benannte Vertragsstaaten :
AT CH FR GB LI SE

(56) Entgegenhaltungen :
DE-U- 1 871 742
DE-U- 7 140 089
DE-U- 7 227 627
DE-U- 7 502 626
DE-U- 7 520 930
FR-A- 2 050 657

(73) Patentinhaber : HILTI Aktiengesellschaft
FL-9494 Schaan (LI)

(72) Erfinder : Hoffmann, Armin
Luitpoldstrasse 13
D-8034 Germering (DE)
Erfinder : Mirsberger, Helmut
Friedrich-List-Strasse 118
D-8000 München 70 (DE)
Erfinder : Bisping, Heinz
Feichtmayrstrasse 15
D-8000 München 50 (DE)

(74) Vertreter : Wildi, Roland
Hilti Aktiengesellschaft Patentabteilung
FL-9490 Schaan (LI)

## Beschreibung

Die Erfindung betrifft einen Spreizdübel mit einem vorzugsweise aus Kunststoff bestehenden, im wesentlichen zylindrischen, über einen Teil seiner Länge mit wenigstens einem vom vorderen Ende ausgehenden Längsschlitz versehenen Dübelkörper mit Aufnahmeöffnung für ein stift- oder schraubenförmiges Spreizelement.

Wegen ihrer Vorteile, wie wirtschaftliche Herstellung, einfache Anwendung sowie gute Beständigkeit gegen Korrosion und Alterung, werden Spreizdübel aus Kunststoff für viele Anwendungen in zunehmendem Masse verwendet. Bei der Anwendung in Vollmaterial ergeben diese Spreizdübel gute Verankerungswerte. Bei Befestigungen in Hohlräume aufweisenden Aufnahmematerialien werden jedoch ausreichende Verankerungswerte nicht immer erreicht. Die Ursache liegt darin, dass sich die Stege des Aufnahmematerials meistens nur über einen Teil der Länge des Spreizdübels erstrecken.

Bei den bekannten Spreizdübeln (siehe z. B. FR-A-2 050 657) erfolgt die Verankerung aufgrund ihrer konstruktiven Auslegung praktisch nur durch Kraftschluss mit dem Aufnahmematerial, d.h. bei Hohlräume aufweisendem Aufnahmematerial mit dessen Stegen. Ein sich aufgrund der vorhandenen Hohlräume anbietender Formschluss wird wegen der konstruktiv bedingt nur geringen Aufweitbarkeit des Dübelkörpers in der Regel nicht erreicht. Zur Erzielung eines solchen Formschlusses würde sich insbesondere das vordere, sich oft im Bereich eines Hohlraumes befindliche Ende des Dübelkörpers eignen.

Der Erfindung liegt die Aufgabe zugrunde, einen Spreizdübel zu schaffen, mit dem auch in Hohlräume aufweisenden Aufnahmematerialien hohe Verankerungswerte erzielt werden.

Gemäss der Erfindung wird diese Aufgabe dadurch gelöst, dass der Dübelkörper wenigstens einen weiteren, von seinem vorderen Ende ausgehenden, gegenüber dem Längsschlitz winkelversetzt angeordneten, sich entlang einem Bruchteil des Längsschlitzes erstreckenden, in Längsrichtung des Dübelkörpers verlaufenden Zusatzschlitz aufweist.

Durch den bzw. die Zusatzschlitze wird die Aufweitbarkeit des Dübelkörpers im vorderen Bereich wesentlich verbessert. Aufgrund der gegenüber dem rückwärtigen Bereich verbesserten Aufweitbarkeit des Dübelkörpers im vorderen Bereich kann dieser durch das Eintreiben eines Spreizelementes so stark aufgeweitet werden, dass ein Formschluss mit dem Aufnahmematerial entsteht. Auch bei Befestigungen in Vollmaterialien können sich durch den bzw. die Zusatzschlitze infolge gleichmässigerer Verteilung des Spreizdruckes erhöhte Verankerungswerte ergeben.

Durch die Zusatzschlitze kann der Dübelkörper nicht nur in radialer, sondern auch in axialer Richtung geschwächt werden. Dies bedeutet, dass er bei axialer Stauchbelastung, beispielsweise beim Eintreiben des Dübels in ein Bohrloch, radial ausknicken kann. Um dies zu vermeiden, beträgt die Länge der Zusatzschlitze zweckmässigerweise 10 bis 30 %, vorzugsweise etwa 20 %, der Länge des Längsschlitzes. Bei diesem Verhältnis wird die Knicksteifigkeit des Dübelkörpers praktisch nicht beeinflusst. Dagegen genügt diese Länge der Zusatzschlitze für die verbesserte Aufweitbarkeit des vorderen Bereiches des Dübelkörpers.

Die Anzahl der Längsschlitze bzw. der Zusatzschlitze kann im Prinzip beliebig gewählt werden. Für eine gleichmässige Verteilung des Spreizdruckes im Bereich der Stege des Aufnahmematerials sowie für einen ausreichenden Formschluss im Bereich der Hohlräume des Aufnahmematerials sind vorteilhaft zwei einander etwa diametral gegenüberliegende Längsschlitze und zwei gegenüber diesen um 90° winkelversetzt angeordnete Zusatzschlitze vorgesehen. Eine solche Anordnung der Längsschlitze und Zusatzschlitze ergibt eine genügende Knicksteifigkeit des Dübelkörpers im mittleren Bereich und eine gute Aufweitbarkeit des Dübelkörpers im vorderen Bereich, wobei sich zusätzliche Vorteile auch in spritztechnischer Hinsicht ergeben.

Die Erfindung soll nachstehend anhand der sie beispielsweise wiedergebenden Zeichnung näher erläutert werden. Diese zeigt einen erfindungsgemässen Spreizdübel in perspektivischer Darstellung.

Der insgesamt mit 1 bezeichnete Dübelkörper weist eine zentrale Aufnahmeöffnung 11 für ein nicht dargestelltes, stift- oder schraubenförmiges Spreizelement auf. Die Aufnahmeöffnung 11 kann über die gesamte Länge des Spreizkörpers oder auch nur über einen Teil seiner Länge verlaufen. Der Dübelkörper 1 weist ein in Einführrichtung vorderes Ende 12 sowie ein rückwärtiges Ende 13 auf. Ferner ist der Dübelkörper 1 mit zwei einander etwa diametral gegenüberliegenden Längsschlitzen 14 versehen. Der sich im Bereich des vorderen Endes 12 befindliche Teil des Dübelkörpers 1 ist ausserdem mit zwei gegenüber den Längsschlitzen 14 um 90° winkelversetzt angeordneten Zusatzschlitzen 15 versehen. Die Länge 1 der Zusatzschlitze 15 beträgt etwa 20 % der Länge L der Längsschlitze 14. Je nach Material des Dübelkörpers 1 sowie nach bevorzugter Verwendung des Spreizdübels kann die Länge 1 der Zusatzschlitze 15 auch etwas mehr oder weniger als 20 % der Länge L der Längsschlitze 14 betragen. Zum besseren Einführen des Dübelkörpers 1 in ein Bohrloch ist dieser an seinem vorderen Ende 12 mit einer Anfasung 16 versehen. Die Mantelfläche des Dübelkörpers 1 kann, wie dargestellt, glatt oder mit einer beliebigen Profilierung versehen sein.

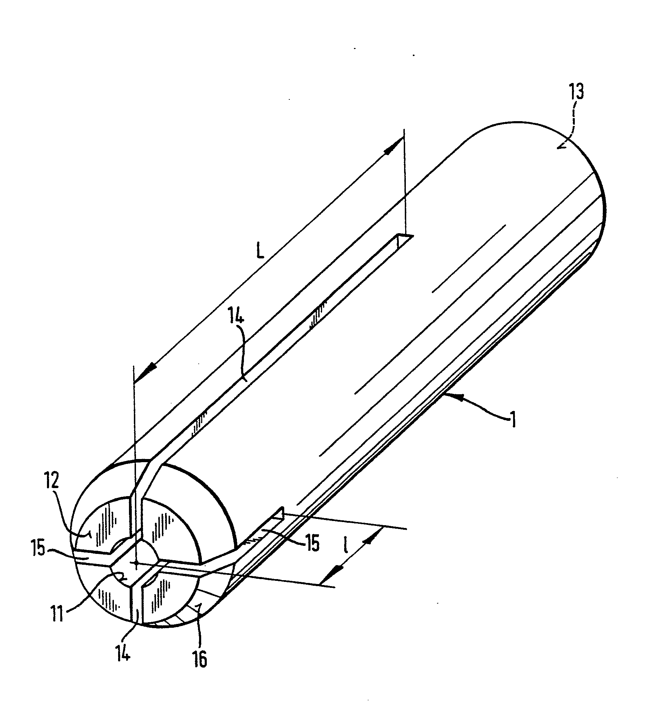

## Patentansprüche

1. Spreizdübel mit einem vorzugsweise aus Kunststoff bestehenden, im wesentlichen zylindrischen, über einen Teil seiner Länge mit wenigstens einem vom vorderen Ende (12) ausgehenden Längsschlitz (14) versehenen Dübelkörper (1) mit Aufnahmeöffnung (11) für ein stift- oder schraubenförmiges Spreizelement, dadurch gekennzeichnet, dass der Dübelkörper (1) wenigstens einen weiteren, von seinem vorderen Ende (12) ausgehenden, gegenüber dem Längsschlitz (14) winkelversetzt angeordneten, sich entlang einem Bruchteil des Längsschlitzes (14) erstreckenden, in Längsrichtung des Dübelkörpers (1) verlaufenden Zusatzschlitz (15) aufweist.

2. Spreizdübel nach Anspruch 1, dadurch gekennzeichnet, dass die Länge (1) des Zusatzschlitzes (15) 10 bis 30 %, vorzugsweise etwa 20 %, der Länge (L) des Längsschlitzes (14) beträgt.

3. Spreizdübel nach Anspruch 1 oder 2, dadurch gekennzeichnet, dass zwei einander etwa diametral gegenüberliegende Längsschlitze (14) und zwei gegenüber diesen um 90° winkelversetzt angeordnete Zusatzschlitze (15) vorgesehen sind.

## Claims

1. An expansible dowel comprising a substantially cylindrical dowel body (1) which preferably consists of plastics material and which is provided over a part of its length with at least one longitudinal slit (14) emanating from its front end (12) and which has a reception aperture (11) for a pin-shaped or screw-shaped expansion element, characterised in that the dowel body (1) has at least one further supplementary slit (15) which emanates from its front end (12), is arranged angularly offset relative to the longitudinal slit (14), extends along a fraction of the longitudinal slit (14) and extends in the longitudinal direction of the dowel body (1).

2. An expansible dowel according to claim 1, characterised in that the length (1) of the supplementary slit (15) amounts from 10 % to 30 %, preferably approximately 20 %, of the length (L) of the longitudinal slit (14).

3. An expansible dowel according to claim 1 or 2, characterised in that there are two approximately diametrically opposed longitudinal slits (14) and, arranged angularly offset through 90° relative to these, two supplementary slits (15).

## Revendications

1. Cheville à expansion comprenant un corps de cheville (1) constitué de préférence en matière plastique, sensiblement cylindrique, muni sur une partie de sa longueur d'au moins une fente longitudinale (14) partant de son extrémité avant (12), et comportant une ouverture de réception (11) pour un élément d'expansion en forme de tige ou de vis, caractérisée en ce que le corps de cheville (1) comprend au moins une autre fente additionnelle (15) partant de son extrémité avant (12), décalée angulairement par rapport à la fente longitudinale (14), s'étendant le long d'une fraction de la fente longitudinale (14), en direction longitudinale du corps de cheville (1).

2. Cheville à expansion selon la revendication 1, caractérisée en ce que la longueur (1) de la fente additionnelle (15) est de 10 à 30 % et de préférence de 20 % de la longueur (L) de la fente longitudinale (14).

3. Cheville à expansion selon la revendication 1 ou 2, caractérisée en ce qu'elle comprend deux fentes longitudinales (14) situées sensiblement à l'opposé l'une de l'autre dans le sens diamétral et deux fentes additionnelles (15) décalées angulairement de 90° par rapport aux premières.